Europäisches Patentamt

European Patent Office

Office européen des brevets

(11) Publication number: **0 138 226**
**A2**

(12) # EUROPEAN PATENT APPLICATION

(21) Application number: **84112476.1**

(22) Date of filing: **16.10.84**

(51) Int. Cl.⁴: **H 04 Q 7/02**

(30) Priority: **17.10.83 JP 194591/83**

(43) Date of publication of application: **24.04.85**
**Bulletin 85/17**

(84) Designated Contracting States: **DE FR GB NL**

(71) Applicant: **NEC CORPORATION, 33-1, Shiba 5-chome, Minato-ku, Tokyo 108 (JP)**

(72) Inventor: **Kai, Tomokazu, c/o NEC Corporation 33-1, Shiba 5-chome, Minato-ku Tokyo (JP)**

(74) Representative: **Vossius Vossius Tauchner Heunemann Rauh, Siebertstrasse 4 P.O. Box 86 07 67, D-8000 München 86 (DE)**

(54) **Mobile radio communication system.**

(57)    In a mobile radio communication system wherein one base station and a plurality of mobile stations are located in a zone, the base station and the mobile stations communicate with each other by commonly utilizing a relatively small number of radio channels, and the base station is controlled to forcibly release a channel being used when it does not receive electromagnetic wave from any one of the mobile stations under communication for a predetermined interval, the transmitting apparatus of each mobile station comprises a voice detector for supplying operating power to a transmission amplifier only when transmission information is inputted to a modulator which modulates a carrier wave with the transmission information and a timer for temporarily supplying the operating power to the transmission amplifier at an interval shorter than the predetermined interval. This system enables communication with saved power consumption and without erroneously releasing a channel being used.

0138226

VOSSIUS · VOSSIUS · TAUCHNER · HEUNEMANN-RAUH

PATENTANWÄLTE

SIEBERTSTRASSE 4 · 8000 MÜNCHEN 86 · PHONE: (089) 47 40 75
CABLE: BENZOLPATENT MÜNCHEN · TELEX 5-29 453 VOPAT D

Our Ref.: T 380 EP
Case: 8145-A
NEC Corporation

16. Oktober 1984

Mobile Radio Communication System

This invention relates to a mobile radio communication system in which a plurality of mobile subscribers commonly utilize a limited number of channels, and more particularly a power saving type or voice-operated mobile radio apparatus suitable for radio telephone system.

In the past, to provide a car or mobile telephone service by using mobile radio apparatus of the not power saving type, during the communication of the mobile radio apparatus, a transmission electromagnetic wave is continuously sent out of the mobile apparatus irrespective of presence or absence of a voice signal. During the speech, a car in which the mobile apparatus is installed may substantially goes out of the service area of one base station, for example, or enter into a tunnel or a underground garage where electromagnetic wave does not reach and the car does not leave the garage in a predetermined interval. Also, a speech termination signal may not be received at the base station owing to a multi-path fading phenomenon or the like thus resulting in a failure of speech termination processing. In these cases, the base station forcibly releases a channel now being used in response to a failure to detect the reception of electromagnetic wave for a predetermined interval, for example, 5 to 30 seconds, and assigns the released channel to another subscriber after another predetermined interval (generally 10 to 60 seconds). In this manner, the radio frequency is utilized efficiently in the mobile telephone system.

This type mobile radio telephone system is described in detail in N. Yoshikata et al paper published by Nippon Telegraph & Telephone Public Corporaiton and entitled "800 MHz Band Land Mobile Telephone Control System", Review of the Electrical Communication Laboratories, Vol. 25 Nos. 11 - 12, November - December, 1977, pages 1172 - 1190.

As will be described later, a power saving or voice-operated type mobile radio transmission apparatus has been proposed. In such a mobile transmission apparatus, the power consumption can be saved efficiently. But this power saving type transmission apparatus does not transmit electromagnetic wave during reception of the speech from the other party. Accordingly, when this power saving type transmission apparatus is incorporated into the mobile telephone system of the type described above, a channel now being used will be forcibly released if the speech from the other party continues so long a period of time that the aforementioned 5 to 30 second predetermiend interval has elapsed.

To cope with this problem, it may be conceived to construct the base station such that it stops the performance of forcibly releasing the channel being utilized only when such a power saving type mobile radio transmission apparatus is used, but to do so, it is necessary to greatly change the construction of mobile communication system. Moreover, there is no countermeasure when a power saving type mobile radio apparatus goes out of the service area.

## Summary of the Invention

It is an object of this invention to provide a novel power saving type mobile radio apparatus capable of speaking without erroneously releasing the channel being used and capable of being applied to a mobile communication system, such as a car telephone system for servicing not power saving type mobile radio apparatus.

According to this invention, there is provided a mobile radio communication system wherein one base station and a plurality of mobile stations are located in a zone, the base station and the mobile stations communicate with each other by commonly utilizing a relatively small number of radio channels, and the base station is controlled to forcibly release a channel being used when it does not receive electromagnetic wave from a transmitting apparatus, comprised of a modulator and a transmission amplifier, of any one of the mobile stations under communication for a predetermined interval, characterized

- 3 -

in that transmitting apparatus of each mobile station comprises means for supplying operating power to the transmission amplifier only when transmission information is inputted to the modulator modulating a carrier wave with the transmission information, and means for temporarily supplying the operating power to the transmission amplifier at an interval shorter than the predetermined interval.

More particularly, according to this invention, a timer is provided for a power saving type mobile radio apparatus for interrupting the transmitted electromagnetic e other than the transmission of a voice signal. The measures a predetermined period after interrupting mission of the electromagnetic wave so as to intermittently send out the wave. Accordingly, arrival of the electromagnetic wave can be detected before the interval has elapsed after which the base station forcibly releases the channel being used, thus ensuring speech, with saved power and without erroneously releasing the channel being used.

Brief Description of the Drawings

In the accompanying drawings:

Fig. 1 is a block diagram showing a prior art power saving type mobile radio apparatus of the voice-operated type;

Fig. 2 is a block diagram showing one embodiment of the power saving type mobile radio apparatus according to this invention;

Fig. 3 is a timing chart showing signals used in the mobile radio apparatus shown in Fig. 1; and

Fig. 4 is a block diagram showing another embodiment of this invention.

Description of the Preferred Embodiments

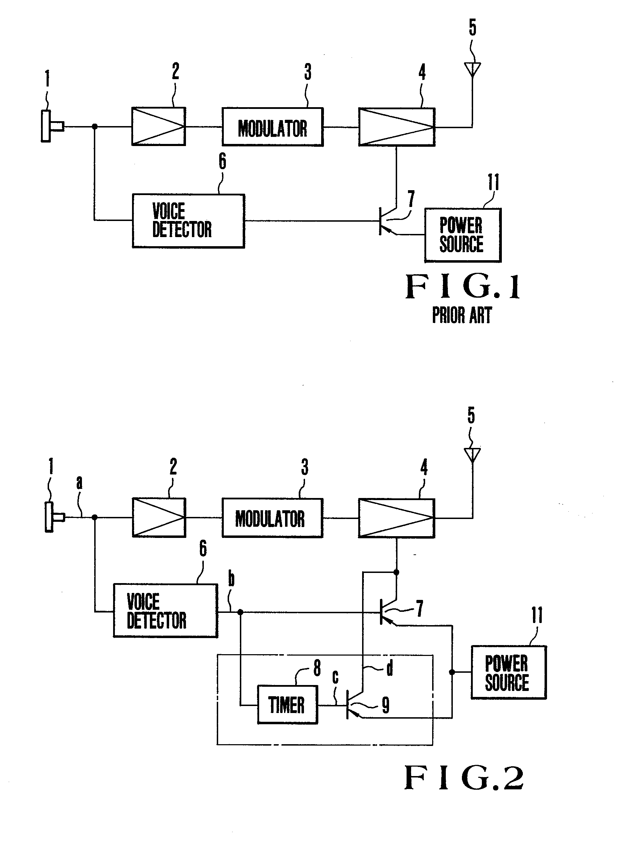

Before describing the preferred embodiments of this invention, a prior art power saving type mobile radio transmission apparatus shown in Fig. 1 will first be described. In this apparatus, the output of a microphone 1 is amplified by an amplifier 2 and then modulates a carrier wave at a modulator 3. The modulated carrier wave is amplified by a radio frequency (RF) power amplifier 4 and then sent to an antenna 5. A portion of the output of the microphone 1 branches to a voice input detector 6 which detects the fact that the output level of the microphone exceeds a predetermined level. Only when the voice input detector 6 produces an output, a transistor 7 is turned ON to supply DC power to the RF power amplifier 4. However, as descrived above, this apparatus has a number of problems. The invention contemplates elimination of such problems.

Preferred embodiments of this invention will now be described with the aid of the accompanying drawings. It is important for the effective utilization of the frequency to know whether a speech is continued via an assigned line or channel or not. Accordingly, based upon an assumption of a case wherein a speech termination signal can not be received even when the speech has actually terminated, a case wherein a mobile radio apparatus enters into an insensitive zone such as a tunnel, for example, and a case wherein the mobile radio apparatus gets out of the service area, the base station constantly supervizes received input electromagnetic field, in other words, it supervizes whether an interval in which the received input electromagnetic field is less than a prescribed value (for example 0(zero) dBμ) persists for a predetermined time of seconds set by a timer of the base station or not. Where the received electromagnetic wave can not be obtained for more than the predetermined seconds, the base station forcibly releases the channel being used so as to enable next speech. This type of radio telephone system is disclosed in the aforementioned paper.

In an embodiment of this invention shown in Fig. 2, the circuit elements identical to those shown in Fig. 1 are designated by the same reference numerals. The voice output of the microphone 1 is applied to the amplifier 2. The output thereof is supplied to the antenna 5 through modulator 3, and amplifier 4 in the same manner as in Fig. 1. The output of the voice detector 6 is applied to the base electrode of a transistor 7 with its emitter electrode supplied with a bias voltage, and collector electrode connected to the control input terminal of the RF power amplifier 4.

The feature of this invention lies in the provision of a timer unit bounded by dot and dash lines shown in Fig. 2. More particularly, the output of the voice input detector 6 is supplied to a timer 8 with its output connected to the base electrode of a transistor 9. The emitter electrode of transistor 9 is supplied with the DC power source 11, while the collector electrode is connected to the control input terminal of the RF power amplifier together with the collector electrode of transistor 7.

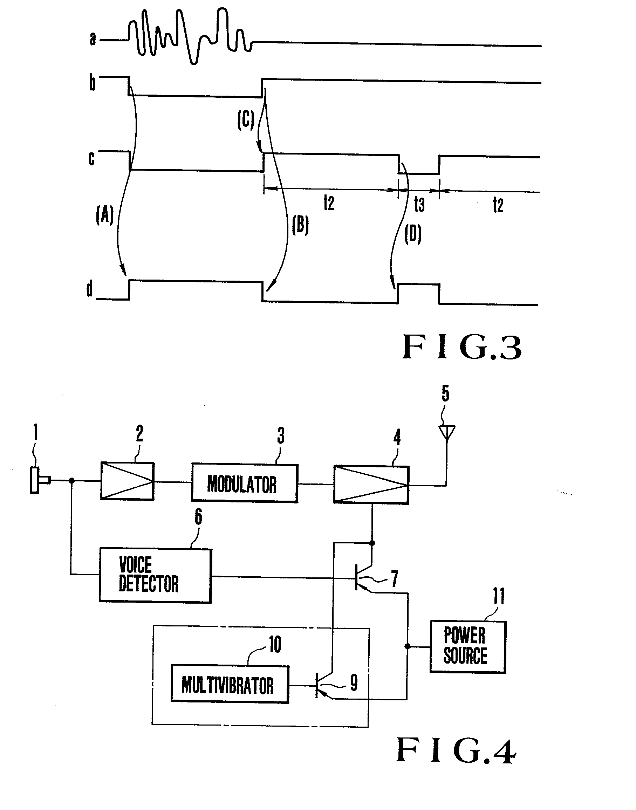

The power saving or voice-operated type mobile radio apparatus shown in Fig. 2 operates as follows. Fig. 3 is a timing chart showing signals $a$, $b$, $c$ and $d$ appearing in the Fig. 2 circuit. The microphone 1, amplifier 2, and modulator 3 operate in the same manner as those shown in Fig. 1. When a voice signal represented by the signal $a$ is detected by the voice detector 6, the transistor 7 is turned ON as shown at (A) in Fig. 3 to cause the RF power amplifier 4 to start transmitting the modulated carrier wave through antenna 5. As the voice input disappears, the transistor 7 is turned OFF as shown at (B) in Fig. 3, thus rendering inoperative the RF power amplifier 4. At the same time, the timer 8 is started, producing the signal $c$ having an ON time of $t_2$ seconds and an OFF time of $t_3$ seconds. After lapse of $t_2$ seconds, the timer 8 becomes OFF for $t_3$ seconds and then

- 7 -

begins counting of $t_2$ seconds. As shown at (D) in Fig. 3, the output of timer 8 is applied to the base electrode of transistor 9 to enable the RF power amplifier 4. In this manner, unless the voice input is inputted, the RF power amplifier 4 outputs intermittently the output to be transmitted for $t_3$ seconds following each period of $t_2$ seconds. It is now assumed that the interval of $t_2$ seconds is set to be shorter than the 5 to 30 second predetermined time of the base station (a timer controlled time of the base station) and that the value of $t_3$ seconds is made long sufficient to allow the reciever in the base station to detect the electromagnetic wave.

With this construction, since electromagnetic wave arrives before the predetermined time of the base station timer is over, so long as the user of the power saving type mobile radio apparatus wants to speak and so long as the apparatus lies in the service area, the connection of a speech channel is ensured. When the mobile radio apparatus gose out of the service area, the channel is released because even the intermittently-transmitted electromagnetic wave can not reach the base station.

In a modified embodiment of this invention shown in Fig. 4, the timer 8 shown in Fig. 2 is replaced by a multivibrator 10 having an ON time of $t_2$ seconds and an OFF time of $t_3$ seconds. This modification operates regardless of the control of a voice signal as shown in Fig. 3. In this case, when the voice disappears, the radio apparatus is made operative to radiate electromagnetic wave for a minimum 0(zero) second and a maximum of $t_2$ seconds after the transmitter has been rendered OFF because of the disappearance of the voice signal. In this embodiment, the power consumption increases to slightly exceed that of the power saving type mobile radio apparatus shown in Fig. 2, but the same advantageous effect can be obtained.

As described above, according to this invention, there is provided a timer having an ON time slightly shorter than the forcible release time of a channel being used and an OFF time necessary for the base station to detect arrival of the electromagnetic wave from the mobile radio apparatus so that the electromagnetic wave is sent out intermittently even when there is no voice input, with the result that the base station will not forcibly release the channel being used. Moreover, there is an advantage that the power saving type radio apparatus can be introduced without modifying the existing mobile radio telephone system, whereby an economic sytem can be realized which is capable of efficiently utilizing frequency and elongating the battery life of the mobile apparatus.

While this invention has thus far been described in conjunction with a preferred embodiment thereof, it will readily be possible for those skilled in the art to

10

put this invention into practice in various other manners. For example, it is possible to provide a wide variety of manners of stoppping and transmitting the electromagnetic wave from the mobile radio apparatus. The electromagnetic wave may be controlled by controlling the DC power supplied to the modulator or the oscillator of the modulator, instead of the DC power to RF power amplifier.

0138226

||

Claims:

1.      In a mobile radio communication system wherein one base station and a plurality of mobile stations are located in a zone, said base station and said mobile stations communicate with each other by commonly utilizing a relatively small number of radio channels, and said base station is controlled to forcibly release a channel being used when it does not receive electromagnetic wave from a transmitting apparatus, comprised of a modulator and a transmission amplifier, of any one of the mobile stations under communication for a predetermined interval, the improvement wherein transmitting apparatus of each mobile station comprises first means for supplying operating power to the transmission amplifier only when transmission information is inputted to the modulator modulating a carrier wave with said transmission information, and second means for temporarily supplying said operating power to said transmission amplifier at an interval shorter than said predetermined interval.

2.      The mobile radio communication system according to claim 1 wherein said first means comprises a voice detector, and a first transistor responsive to an output of said voice detector for supplying the operating power to said transmission amplifier, and said second means comprises a timer responsive to the output of said voice input detector, and a second transistor controlled by a

- 11 -

12

timer output for temorary supply of said operating power to said transmission amplifier.

3.     The mobile radio communication system according to claim 1/wherein said second means comprises a multivibrator having different ON/OFF times and a transistor which is turned ON and OFF in accordance with outputs of said multivibrator for temorary supply of said operating power to said transmission amplifier.

or 2

4.     In a mobile radio communication system wherein one base station and a plurality of mobile stations are located in a zone, said base station and said mobile stations communicate with each other by commonly utilizing a relatively small number of radio channels, and said base station is controlled to forcibly release a channel being used when it does not receive electromagnetic wave from any one of the mobile stations under communication for a predetermined interval, the improvement wherein a given mobile station is of a voice-operated type and, under communication, intermittently transmits an electromagnetic wave to said base station at an interval shorter than said predetermined interval when said given mobile station is supplied with no voice signal.

0138226

**F I G.1**

PRIOR ART

**F I G.2**

FIG.3

FIG.4